# EUROPÄISCHE PATENTSCHRIFT

(11) **EP 0 943 365 B1**
(45) Veröffentlichungstag und Bekanntmachung des Hinweises auf die Patenterteilung: **28.02.2001**
(21) Anmeldenummer: 98122609.5
(22) Anmeldetag: 27.11.1998
(51) Int. Cl.: B01D 29/11

(54) **Dichteinrichtung für ein Ringfilter in einem Filtergehäuse**
Sealing for ring filter inside a filter housing
Joint pour filtre annulaire dans un boîtier filtrant

(30) Priorität: 19.02.1998 DE 19806929
(43) Veröffentlichungstag der Anmeldung: 22.09.1999
(73) Patentinhaber: MAHLE Filtersysteme GmbH, 70376 Stuttgart (DE)
(72) Erfinder: Schneider, Horst, 71336 Waiblingen (DE); Waibel, Hans, 71686 Remseck/Aldingen (DE)
(74) Vertreter: Patentanwalts-Partnerschaft Rotermund + Pfusch

(56) Entgegenhaltungen:
- WO-A-94/21350
- DE-A- 4 416 577
- DE-A- 19 606 182
- DE-A- 19 624 523

## Beschreibung

Die Erfindung betrifft eine Dichteinrichtung für ein Ringfilter in einem Filtergehäuse nach dem Oberbegriff des Patentanspruchs 1.

Bei einer bekannten Dichteinrichtung dieser Art greift ein kompakt aus Kunststoff bestehender Dichtring in eine zugeordnete beispielsweise aus Metall bestehende Ringnut ein. Ein derartiger Preßsitz verliert im Laufe der Zeit bei bestimmten Flüssigkeiten, insbesondere wenn er höheren Temperaturen ausgesetzt ist, seine Dichtfunktion. Dies gilt insbesondere für einen Einsatz des Ringfilters als Kraftstoffilter für Verbrennungsmotoren. Besonders ungünstig auf die Dichtfunktion wirkt Dieselkraftstoff als zu filterndes Medium.

Der Verlust an Dichtfunktion läßt sich dadurch erklären, daß das verpreßte Kunststoffmaterial des Dichtringes sich einerseits bei höheren Temperaturen und andererseits durch ein von der Flüssigkeit bewirktes Aufquellen plastisch verformt.

Die plastische Verformung geht teilweise soweit, daß der anfängliche Preßsitz der Dichtung vollständig aufgehoben wird.

Beim Filter nach den Druckschrift DE-A-196 24 523 erfolgt die radiale Dichtung zwischen dem Dichtring und der Dichtnut nicht über eine elastisch verspannte radiale Anlage der U-Schenkel des Dichtringes and den Ringnutflanken, sondern über eingelegte radiale Dichtringe (D1, Abb. 6;19) aus elastischem Material.

Die U-Schenkel selbst besitzen in dem Zustand, in dem sie sich innerhalb der Ringnut befinden, keinen anderen Abstand, als in unmontiertem Zustand, das heißt sie sind in montiertem Zustand radial nicht verspannt.

Der wesentliche Unterschied der erfindungsgemäßen Ausführung besteht somit darin, daß eine radiale Verspannung der U-Schenkel gegeben ist, durch die eine Dichtwirkung erzielt wird. Die Dichtwirkung kommt dabei dadurch zustande, daß die U-Schenkel unter radialem Druck an den Ringflanken der Ringnut anliegen.

Ein besonderer Vorteil der erfindungsgemäßen Ausführung besteht darin. daß zusätzliche radiale Dichtringe wie bei dem gattungsbildenden Filter eingespart werden können.

Hiervon ausgehend beschäftigt sich die Erfindung mit dem Problem, ohne zusätzlichen radialen Dichtringe eine dauerhaft funktionsfähige Dichtung zu schaffen und zwar insbesondere mit Bezug auf einen Einsatz des Filters als Kraftstoff-Filter für Verbrennungsmotoren. Dabei soll die Dichtheit insbesondere beim Filtern von Dieselkraftstoff absolut sicher gewährleistet sein.

Eine Lösung für dieses Problem zeigt eine Ausführung einer gattungsgemäßen Dichtungseinrichtung mit den kennzeichnenden Merkmalen des Patentanspruchs 1 auf.

Zweckmäßige Ausgestaltungen sind Gegenstand der Unteransprüche.

Die erfindungsgemäße Lösung beruht auf folgenden Gedanken.

Durch seinen U-förmigen Querschnitt kann der Dichtring derart ausgebildet werden, daß die U-Schenkel beim Einführen des Dichtringes in die ihm zugeordnete Ringnut radial federnd gegeneinander verspannt werden. Die erforderliche Dichtung wird dadurch erreicht, daß sich die U-Schenkel federnd an die Flanken der Ringnut anlegen. Besteht der Dichtring aus einem Kunststoff und bewirkt die zu filternde Flüssigkeit bei diesem Kunststoff ein Aufquellen, so können sich die U-Schenkel wie bei einer Federspange elastisch verformen. Wichtig für eine ausreichende Dichtfunktion ist, daß die U-Schenkel mit einer ausreichenden Vorspannung in die Ringnut eingeführt werden. Bei beispielsweise einem starken Quellen des Kunststoffmaterials bei höheren Betriebstemperaturen des Filters dehnen sich die von den U-Schenkeln gebildeten zwei Ringbereiche nach radial außen aus. Durch eine solche Ausdehnung wird die Dichtfunktion des radial äußeren U-Schenkels des Dichtringes verbessert. Die Dichtung an dem radial äußeren U-Schenkel ist in diesem Zustand ausreichend, so daß bei diesem Zustand die Dichtfunktion des inneren U-Schenkels notfalls aufgehoben sein darf. Tritt danach ein Betriebszustand auf, bei dem die Quellung des Ringmaterials erheblich niedriger liegt, erhält bzw. verstärkt der radial innere U-Schenkel des Dichtringes seine Dichtwirkung. Die Dichtwirkung des radial inneren U-Schenkels erhöht sich sogar, wenn es im Filterbetrieb zu einem Schrumpfen des Dichtringmaterials kommt. Auf diese Weise leidet die Dichtfunktion der erfindungsgemäßen Einrichtung selbst dann nicht, wenn durch ein extrem starkes Schrumpfen der radial äußere U-Schenkel seine Dichtwirkung verliert, da in einem solchen Zustand die Dichtwirkung des radial inneren U-Schenkels besonders gut ist.

Um eine möglichst hohe elastische Verformung der U-Schenkel des Dichtringes erreichen zu können, ist es vorteilhaft, wenn die Dichtfunktion lediglich im Bereich der freien Enden der U-Schenkel ausgeübt wird. Zu diesem Zweck weisen die U-Schenkel an ihren radial dichtenden Seiten jeweils radial abstehende Erhebungen in Form eines überstehenden Ringbundes auf.

Wird ein Filter mit einer erfindungsgemäßen Dichtung zum Filtern eines Kraftstoffes für Verbrennungsmotoren, insbesondere eines Dieselkraftstoffes eingesetzt, eignen sich als Materialien für die Ringdichtung Polyamid (PA) und Polypropylen (PP).

Die Ringdichtung kann grundsätzlich an der Endscheibe des Ringfilters oder auch an dem Filtergehäuse vorgesehen sein. An der Endscheibe des Ringfilters wird die Ringdichtung insbesondere dann vorzusehen sein, wenn die Endscheibe aus Kunststoff, wie beispielsweise Polyamid oder Polypropylen besteht.

Ein Ausführungsbeispiel ist in der Zeichnung dargestellt.

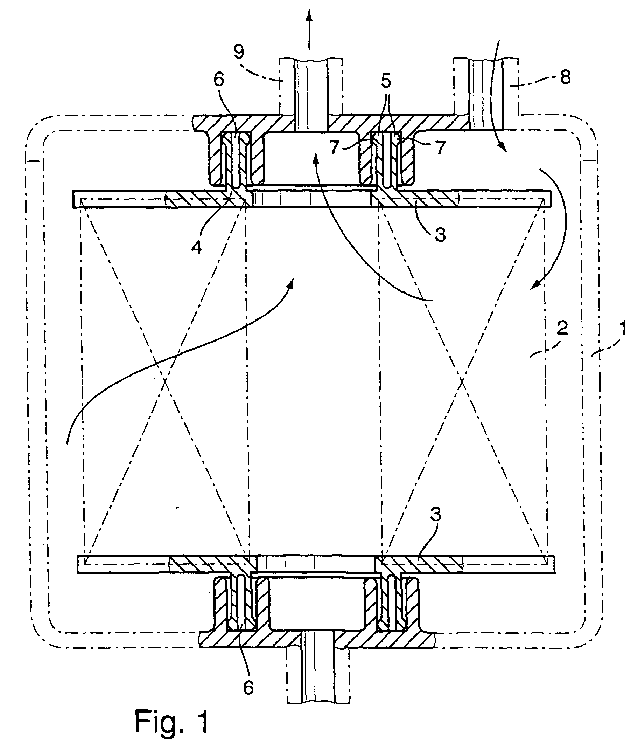

In dieser zeigt
- Fig. 1: ein schematisch angedeutetes Filtergehäuse mit einem eingesetzten Ringfilter mit einer im Schnitt dargestellten Dichtungseinrichtung zwischen dem Ringfilter und dem Filtergehäuse.

In einem Filtergehäuse 1 ist ein radial durchströmbares Ringfilter 2 axial dicht gelagert.

Die axialen Dichtungen bestehen jeweils aus einem an eine Endscheibe 3 des Ringfilters 2 angeformten Dichtring 4 mit einem etwa U-förmigen Querschnitt. Aufgrund dieses U-förmigen Querschnittes besitzt der Dichtring 4 im Schnitt zwei U-Schenkel 5. Diese U-Schenkel 5 bilden jeweils einen umlaufenden, radial innen und radial außen liegenden, umlaufenden Ringbereich.

Der Dichtring 4 greift mit seinen beiden Ringbereichen unter gegenseitiger radialer Verspannung der U-Schenkel 5 in eine Ringnut 6 des Filtergehäuses 1 ein.

Die U-Schenkel 5 sind an ihren freien Enden mit gegenüber der jeweils zugehörigen Dichtflanke der Ringnut 6 radial überstehenden Ringkragen 7 versehen.

In dem Filtergehäuse 1 wird das Ringfilter 2 von radial außen nach innen entsprechend den eingetragenen Pfeilen durchströmt. Die zu filternde Flüssigkeit tritt durch einen Einlaßstutzen 8 in das Filtergehäuse 1 ein und verläßt dieses durch einen Auslaßstutzen 9.

Bei einem Einsatz des Filters als Dieselkraftstoff-Filter bestehen die Endscheiben 3 aus Polyamid-Material PA 6. Das Filtergehäuse 1 kann aus Metall oder Kunststoff bestehen.

## Patentansprüche

1. Dichtungseinrichtung zwischen einer Endscheibe eines Ringfilters für Flüssigkeiten, insbesondere für Kraftstoff für Verbrennungsmotoren, als einer ersten Dichtfläche und einer Wand eines das Ringfilter einschließenden Filtergehäuses als einer zweiten Dichtfläche, bei der jeweils an einer dieser Dichtflächen eine Ringnut und an der anderen Dichtfläche ein in die Ringnut radial dichtend einschiebbarer Dichtring vorgesehen ist, der einen etwa U-förmigen Querschnitt mit axial frei abragenden U-Schenkeln besitzt,
**dadurch gekennzeichnet,**
daß bei in die Ringnut (6) eingesetztem Zustand die U-Schenkel (5) des Dichtringes (4) bei radial verringertem Abstand elastisch gegeneinander verspannt sind.

2. Dichtungseinrichtung nach Anspruch 1,
**dadurch gekennzeichnet,**
daß die freien Enden der U-Schenkel (5) des Dichtringes (4) mit gegenüber den Dichtflanken der Ringnut (6) jeweils radial abstehenden, umlaufenden Vorsprüngen versehen sind.

3. Dichtungseinrichtung nach Anspruch 1 oder 2,
**dadurch gekennzeichnet,**
daß der Dichtung (4) aus Kunststoff besteht.

4. Dichtungseinrichtung nach Anspruch 3,
**dadurch gekennzeichnet,**
daß der Kunststoff Polyamid oder Polypropylen ist.

## Claims

1. Sealing device between an end disk of an annular filter for liquids, in particular for fuel for internal combustion engines, as a first sealing face, and a wall of a filter housing enclosing the annular filter as a second sealing face, in which in each case an annular groove is provided on one of these sealing faces and a conical nipple which can be inserted with radial sealing into the annular groove is provided on the other sealing face, which conical nipple has an approximately U-shaped cross-section with axially freely projecting U-arms, characterised in that in the inserted condition of the annular groove (6) the U-arms (5) of the conical nipple (4) are elastically tensioned against one another with radially reduced spacing.

2. Sealing device according to claim 1, characterised in that the free ends of the U-arms (5) of the conical nipple (4) are provided with surrounding projections which protrude radially with respect to the sealing flanks of the annular groove (6) in each case.

3. Sealing device according to claim 1 or 2, characterised in that the seal (4) consists of a plastics material.

4. Sealing device according to claim 3, characterised in that the plastics material is polyamide or polypropylene.

## Revendications

1. Dispositif d'étanchéité entre un disque d'extrémité d'un filtre annulaire pour liquides, en particulier pour carburant pour moteurs à combustion interne, comme première surface d'étanchéité, et une paroi d'un boîtier de filtre renfermant le filtre annulaire, comme deuxième surface d'étanchéité, dans lequel sur une de ces surfaces d'étanchéité est prévue une gorge annulaire et sur l'autre surface d'étanchéité est prévu un joint annulaire qui peut être engagé dans la gorge annulaire de façon à assurer l'étanchéité radialement et a une section à peu près en U avec des ailes de U s'étendant librement axialement, caractérisé par le fait qu'à l'état engagé dans la gorge annulaire (6), les ailes de U (5) du joint annulaire (4) sont serrées élastiquement l'une vers l'autre avec distance réduite radialement.

2. Dispositif d'étanchéité selon la revendication 1, caractérisé par le fait que les extrémités libres des ailes de U (5) du joint annulaire (4) sont pourvues chacune d'une saillie périphérique saillant radialement vis-à-vis du flanc d'étanchéité associé de la gorge annulaire (6).

3. Dispositif d'étanchéité selon l'une des revendications 1 et 2, caractérisé par le fait que le joint d'étanchéité (4) est en plastique.

4. Dispositif d'étanchéité selon la revendication 3, caractérisé par le fait que le plastique est du polyamide ou du polypropylène.
